# EUROPÄISCHE PATENTSCHRIFT

(11) **EP 3 782 916 B1**
(45) Veröffentlichungstag und Bekanntmachung des Hinweises auf die Patenterteilung: **06.11.2024**
(21) Anmeldenummer: 20176009.7
(22) Anmeldetag: 22.05.2020
(51) Int. Cl.: B65B 21/18, B65G 47/90

(54) **GREIFEINSATZ FÜR EINE PACKTULPE ZUM KOPFSEITIGEN ERGREIFEN VON INSBESONDERE DURCH EINEN VERSCHLUSS VERSCHLIESSBAREN FLASCHEN, PACKTULPE, VORRICHTUNG UND VERFAHREN ZUM KOPFSEITIGEN ERGREIFEN EINER FLASCHE**
GRIPPING INSERT FOR A PACKING CUP FOR TOP-SIDE GRIPPING, IN PARTICULAR, BOTTLES, PACKING CUP, DEVICE AND METHOD FOR GRIPPING A BOTTLE ON THE TOP SIDE
INSERT DE PRÉHENSION POUR UNE TULIPE DE PRÉHENSION PERMETTANT D'APPRÉHENDER CÔTÉ TÈTE, EN PARTICULIER DES BOUTEILLES POUVANT ÊTRE FERMER À L'AIDE D'UNE FERMETURE, TULIPE DE PRÉHENSION, DISPOSITIF ET PROCÉDÉ DE PRÉHENSION CÔTÉ TÊTE D'UNE BOUTEILLE

(30) Priorität: 23.08.2019 DE 102019005953; 10.11.2019 DE 102019007767
(43) Veröffentlichungstag der Anmeldung: 24.02.2021
(73) Patentinhaber: Zodrow, Rudolf, 40235 Düsseldorf (DE)
(72) Erfinder: Zodrow, Rudolf, 40235 Düsseldorf (DE); Dr. Rupprecht, Gregor, 40235 Düsseldorf (DE)
(74) Vertreter: Lotze, Rüdiger

(56) Entgegenhaltungen:
- EP-A2- 3 103 729
- EP-B1- 1 427 637
- DE-A1- 102016 000 174
- DE-U1- 202015 008 614
- DE-U1- 202018 004 841

## Beschreibung

Die Erfindung betrifft einen hülsenförmigen oder topfförmigen, elastisch verformbaren Greifeinsatz für eine Packtulpe zum kopfseitigen Ergreifen von insbesondere durch einen Verschluss verschließbaren Flaschen mit einem rückseitigen Ende, einer umlaufenden Wandung mit einer Außenseite und einer Innenseite sowie einem vorderseitigen, dem Flaschenkopf zugewandten Ende. Ferner betrifft die Erfindung eine Packtulpe mit einem solchen Greifeinsatz sowie eine Vorrichtung und ein Verfahren zum kopfseitigen Ergreifen einer insbesondere durch einen Verschluss verschließbaren Flasche.

Packtulpen dieser oder ähnlicher Art sind in verschiedenen Ausführungen seit langem bekannt. Die Packtulpen umfassen dabei ein topfförmiges Gehäuse, einen hülsenförmigen oder topfförmigen, elastisch verformbaren Greifeinsatz der oben beschriebenen Art und einen auf den Einsatz an dessen rückseitigem Ende mit einer axialen Druckkraft einwirkenden Stellkolben, wobei der elastisch verformbare Greifeinsatz an seinem vorderseitigen, im Betrieb der Packtulpe dem Flaschenkopf zugewandten Rand an einem gehäusefesten radial nach innen weisenden Absatz abgestützt ist.

Die Packtulpen sind in der Regel mit anderen gleichartigen Packtulpen zu einer Gruppe in einem Packkopf zusammengefasst und dienen zum kopfseitigen Ergreifen von Flaschen in Flaschenverpackungsmaschinen. Durch den Packkopf werden die Packtulpen gemeinsam auf eine entsprechende Gruppe von Flaschen abgesenkt. Dabei tauchen die Flaschen mit ihren Köpfen in die einzelnen Packtulpen ein. Die Packtulpen sind dafür ausgelegt, bei entsprechender Ansteuerung die Flaschen durch radiale Klemmung des Flaschenkopfes mittels des sich unter Druckbeaufschlagung kontrolliert radial nach innen wölbenden elastischen Greifeinsatzes zu ergreifen. Die ergriffenen Flaschen einer Gruppe können dann mit dem Packkopf angehoben und versetzt werden, beispielsweise in einen mit Stellplätzen für die einzelnen Flaschen versehenen Kasten oder freistehend auf ein Transportband.

Für die Funktion der ansteuerbaren Packtulpen ist nicht nur wichtig, dass sie die Flaschen durch radiale Klemmung des Flaschenkopfes sicher ergreifen, sondern auch, dass das Ergreifen möglichst schonend erfolgt und dass die Flaschen während des Greifvorgangs präzise in der Packtulpe zentriert werden. Dies gilt vor allem dann, wenn der Flaschenkopf eine besondere Ausstattung aufweist, beispielsweise foliiert ist oder einen versiegelten Schraubverschluss hat, wie dies bei Mineralwasserflaschen üblich ist. Außerdem soll die Packtulpe möglichst nahe an ihrem vorderen Ende den Flaschenkopf erfassen, so dass der Flaschenkopf nur wenig in die Packtulpe einzutauchen braucht, um sicher und möglichst ohne Nachpendeln des Flaschenkörpers ergriffen werden zu können, aber auch um die Flasche schnell freizugeben, was vor allem beim Aufsetzen freistehender Flaschen, insbesondere leerer Kunststoffflaschen, auf ein Transportband die Gefahr des Umkippens vermindert. Eine besondere Herausforderung stellt auch der insbesondere bei PET-Flaschen regelmäßig vorhandene Kunststoffring unmittelbar unterhalb des Schraubverschlusses dar, welcher ein sicheres Greifen erschwert.

Eine gattungsgemäße Packtulpe geht aus der WO 2008/055893 A1 hervor. Sie umfasst entsprechend ein topfförmiges Gehäuse, einen hülsenförmigen, elastisch verformbaren Einsatz sowie einen bevorzugt einteilig mit dem Einsatz ausgebildeten Stellkolben. Bei Einleitung eines Druckmediums, in der Regel Druckluft, in den Druckraum des Gehäuses bewegt sich der Stellkolben axial nach unten und sorgt hierdurch für eine kontrollierte Verformung des hülsenförmigen Greifeinsatzes, wodurch die Flasche, wie vorstehend beschrieben, gegriffen wird. Weitere Ausgestaltungen von Packtulpen mit hülsenförmigen, elastisch verformbaren Einsätzen sind beispielsweise in den Druckschriften DE 20 2007 001 164 U1, EP 1 427 637 B1 oder DE 20 2011 004 883 U1 beschrieben.

Eine weitere gattungsgemäße Packtulpe geht auch aus der EP 3 103 729 hervor. Wie sich in praktischen Versuchen erwiesen hat, wird mit dieser Packtulpe durchaus ein schonendes und sicheres Ergreifen der Flasche erreicht. Allerdings besteht die Gefahr, dass sich der gesamte Greifeinsatz bei zu hohem Betriebsdruck aus dem Gehäuse herauswölbt, wodurch die Packtulpe außer Funktion gerät.

Der Erfindung liegt daher die Aufgabe zugrunde, einen Greifeinsatz für eine Packtulpe zum kopfseitigen Ergreifen von insbesondere durch einen Verschluss verschließbaren Flaschen bereitzustellen, der ein schonendes und gleichzeitig sicheres Ergreifen der Flaschen mit guter Zentrierwirkung gestattet, wobei die Gefahr eines unbeabsichtigten Herauswölbens des Greifeinsatzes aus dem Packtulpengehäuse sicher vermieden wird. Ferner liegt der Erfindung die Aufgabe zugrunde, eine entsprechende Packtulpe zum kopfseitigen Ergreifen von Flaschen sowie eine Vorrichtung und ein Verfahren zum kopfseitigen Ergreifen von Flaschen bereitzustellen.

Die Aufgabe wird erfindungsgemäß mit einem hülsenförmigen, elastisch verformbaren Greifeinsatz nach dem Oberbegriff des Patentanspruch 1 dadurch gelöst, dass die umlaufende Wandung des Greifeinsatzes an ihrer Innenseite über ihren Umfang verteilt eine Mehrzahl von axialen Schwächungen in Form im Wesentlichen axial verlaufender Nuten aufweist, wobei ein am rückseitigen Ende des Greifeinsatzes angeordneter Längsabschnitt der umlaufenden Wandung an dessen Innenseite eine erhöhte Wandstärke aufweist, wobei an der Außenseite der umlaufenden Wandung des Greifeinsatzes eine Mehrzahl über den Umfang des Greifeinsatzes verteilter, sich in axialer Richtung erstreckender Stege ausgebildet sind, wobei sich die axialen Stege über den Umfang des Greifeinsatzes mit geschwächten Bereichen abwechseln, wobei die Anzahl der sich in axialer Richtung erstreckenden Stege der Anzahl der an der Innenseite der umlaufenden Wandung vorgesehenen, im Wesentlichen axial verlaufenden Nuten entspricht, wobei die Stege und die Nuten in radialer Richtung paarweise übereinander liegen, wobei bei der Verformung des Greifeinsatzes unter Druckbeaufschlagung die äußeren Längskanten der Nuten zur Begrenzung der Verformung dienen, indem sie bei zunehmender Verformung aneinanderstoßen und somit eine weitere radial einwärtige Bewegung der umlaufenden Wandung des Greifeinsatzes verhindern.

Der besondere Vorteil des erfindungsgemäßen Greifeinsatzes besteht darin, dass ein besonderes schonendes Greifen der Flaschen mit exzellenter Zentrierwirkung erreicht wird. So haben praktische Versuche der Erfinder gezeigt, dass der Greifeinsatz sich infolge der innenseitig vorgesehenen Mehrzahl von axialen Schwächungen in Form im Wesentlichen axial verlaufender Nuten bei Druckbeaufschlagung radial einwärtig mit höchster Symmetrie verformt, wodurch bei der zu ergreifenden Flasche eine optimale Zentrierwirkung ohne lokale Druckspitzen erreicht wird. Die innenseitige erhöhte Wandstärke des am rückseitigen Ende des Greifeinsatzes angeordneten Längsabschnitts der umlaufenden Wandung sorgt bei der Druckbeaufschlagung und der daraus resultierenden Verformung zudem für ausreichend mechanische Stabilität, so dass ein Herauswölben des gesamten Greifeinsatzes aus dem Gehäuse sicher vermieden wird. Wie vorstehend erwähnt, dienen die äußeren Längskanten der Nuten bei der Verformung des Greifeinsatzes unter Druckbeaufschlagung vorteilhafterweise zur Begrenzung der Verformung, indem sie bei zunehmender Verformung aneinanderstoßen und somit eine weitere radial einwärtige Bewegung der umlaufenden Wandung des Greifeinsatzes, die im Extremfall zum Herauswölben des Greifeinsatzes aus dem Gehäuse (und damit zu einer Betriebsunterbrechung) führen würde, verhindern.

Die Anzahl der erfindungsgemäß an der Innenseite des Greifeinsatzes vorgesehenen im Wesentlichen axial verlaufenden Nuten kann unterschiedlich gewählt sein. Eine Anzahl von 4 bis 6 über den Umfang verteilter Nuten hat sich in Versuchen als geeignet erwiesen.

Nach einer vorteilhaften Ausgestaltung der Erfindung ist vorgesehen, dass die im Wesentlichen axial verlaufenden Nuten einen runden, insbesondere kreisrunden, Querschnitt aufweisen. Ein solch runder, insbesondere kreisrunder, Querschnitt ohne kleine Radien o.ä. ermöglicht eine einfache Fertigung des Greifeinsatzes und zudem vereinfachte Reinigung.

Erfindungsgemäß weist ein am rückseitigen Ende des Greifeinsatzes angeordneter Längsabschnitt der umlaufenden Wandung an dessen Innenseite eine erhöhte Wandstärke auf. Dabei kann die Wandstärke zum rückseitigen Ende des Greifeinsatzes stetig zunehmen. Bevorzugt im Sinne eines optimierten Verformungsverhalten ist jedoch, dass die Erhöhung der Wandstärke stufenförmig ausgebildet ist. Ferner ist bevorzugt, dass sich die im Wesentlichen axial verlaufenden Nuten nicht bis in den Längsabschnitt erhöhter Wandstärke erstrecken.

Insbesondere aus fertigungstechnischen Gründen kann darüber hinaus vorgesehen sein, dass bei einer stufenförmigen Erhöhung der Wandstärke zwischen den Wandabschnitten unterschiedlicher Wandstärke einer konischer Übergangsabschnitt vorgesehen ist.

Kunststoffflaschen, insbesondere PET-Flaschen, stellen bei der Handhabung mit Packtulpen eine besondere Herausforderung dar, da sie insbesondere im entleerten Zustand leichtgewichtig und wenig standfest sind. Dies bedeutet, dass eine Pendelbewegung der Flasche in der Packtulpe zu vermeiden ist, um ein Umfallen der Flasche beim Absetzen der Flasche auszuschließen. Als konstruktive Besonderheit weisen insbesondere PET-Flaschen in der Regel zudem einen unmittelbar unterhalb des Schraubverschlusses angeordneten Kunststoffring auf, dessen Durchmesser den des Schraubverschlusses überragt. Insbesondere zum sicheren Ergreifen eines solchen Kunststoffrings einer PET-Flasche unter Vermeidung einer Pendelbewegung der Flasche kann ferner vorgesehen sein, dass die an der Innenseite der umlaufenden Wandung zwischen den im Wesentlichen axial verlaufenden Nuten angeordneten Wandabschnitte eine Mehrzahl, insbesondere eine bezogen auf alle Wandabschnitte identische Anzahl, von in Umfangsrichtung des Greifeinsatzes ausgerichteten Rillen aufweisen. Bei identischer Anzahl von Rillen bilden jeweils einander zugeordnete, d.h. auf einer Axialebene des Greifeinsatzes liegende Rillen der einzelnen Wandabschnitte gemeinsam bevorzugt eine durch die im Wesentlichen axial verlaufenden Nuten unterbrochene Ringnut aus.

Um im Falle von Kunststoffflaschen verschiedene Flaschentypen mit teilweise stark variierendem Durchmesser der unterhalb des Schraubverschlusses angeordneten Kunststoffringe sicher handhaben zu können, kann nach einer weiteren vorteilhaften Ausgestaltung der Erfindung vorgesehen sein, dass die Wandstärke der umlaufenden Wandung des Greifeinsatzes im Bereich seines vorseitigen Endes einen Längsabschnitt mit reduzierter Wandstärke aufweist, derart, dass sich die Wandstärke der umlaufenden Wandung vom rückseitigen Ende des Greifeinsatzes bis zu seinem vorderseitigen Ende zweifach abgestuft reduziert. Es versteht sich dass die jeweilige axiale Länge der verschiedenen Axialabschnitte des Greifeinsatzes mit unterschiedlicher Wandstärke abhängig vom Anwendungsfall variabel gewählt werden kann. Es können ferner weitere Abstufungen der Wandstärke vom rückseitigen zum vorderseitigen Ende des Greifeinsatzes vorgesehen sein.

Zur weiteren Optimierung des Verformungsverhaltens des Greifeinsatzes ist erfindungsgemäß vorgesehen, dass an der Außenseite der umlaufenden Wandung des Greifeinsatzes eine Mehrzahl über den Umfang des Greifeinsatzes verteilter, sich in axialer Richtung erstreckender Stege ausgebildet sind, wobei sich die axialen Stege über den Umfang des Greifeinsatzes mit geschwächten Bereichen abwechseln. Dabei entspricht die Anzahl der sich in axialer Richtung erstreckenden Stege erfindungsgemäß der Anzahl der an der Innenseite der umlaufenden Wandung vorgesehenen, im Wesentlichen axial verlaufenden Nuten, wobei die Stege und die Nuten in radialer Richtung erfindungsgemäß paarweise übereinander liegen.

Darüber hinaus kann vorgesehen sein, dass die geschwächten Bereiche jeweils eine parallel zu dem jeweiligen geschwächten Bereich ausgerichtete Verstärkungsrippe aufweisen. Diese Verstärkungsrippen können gemäß einer weitergehenden Ausgestaltung der Erfindung gegenüber dem vorderseitigen Ende des Greifeinsatzes verkürzt sein oder im Bereich des vorderseitigen Endes eine Auskehlung aufweisen. Hierdurch wird in diesem Bereich des Greifeinsatzes eine gezielte Materialschwächung erreicht, um eine zusätzliche Verformung und damit einen zusätzlichen axialen Anlagepunkt bzw. eine zusätzliche Anlageebene am Flaschenhals zu erreichen. Dies reduziert weiter die Pendelneigung der gegriffenen Flasche und verbessert insgesamt das sichere und schonende Greifen der Flasche.

Der Greifeinsatz kann weitere konstruktive Besonderheiten aufweisen. So ist nach einer weiteren vorteilhaften Ausgestaltung der Erfindung vorgesehen, dass der Greifeinsatz an seinem vorderseitigen Ende einen radial nach außen weisenden Verstärkungskragen aufweist. Mit diesem kann der Greifeinsatz beispielsweise im Gehäuse gehalten oder eingeklemmt sein, um eine unbeabsichtigtes Herausrutschen des Greifeinsatzes bei Druckbeaufschlagung oder bei Überschreitung des üblichen Betriebsdruckes auszuschließen.

Zur Vermeidung einer Pendelbewegung der Flasche im Greifeinsatz durch Bereitstellung weiterer Anlagepunkte an die Flasche kann nach einer weiteren vorteilhaften Ausgestaltung der Erfindung vorgesehen sein, dass in der umlaufenden Wandung des Greifeinsatzes im Bereich seines rückseitigen Endes eine Mehrzahl zum rückseitigen Ende des Greifeinsatz geöffneter taschenförmiger Einschnitte vorgesehen sind, wobei die taschenförmigen Einschnitte jeweils eine äußere Taschenwand und eine innere Taschenwand aufweisen, wobei die taschenförmigen Einschnitte ferner mittels eines Druckmediums radial spreizbar unter radial einwärtiger Verformung der inneren Taschenwand ausgebildet sind.

Nach einer weiteren vorteilhaften Ausgestaltung der Erfindung ist vorgesehen, dass der Greifeinsatz topfförmig mit einem rückseitigen Boden ausgebildet ist, wobei der Boden im Längsschnitt des Greifeinsatzes bevorzugt trapezförmig ausgebildet ist. Insbesondere eine solche Trapezform verleiht dem Greifeinsatz eine verbesserte mechanische Stabilität.

Nach einer weiteren besonders vorteilhaften Ausgestaltung der Erfindung ist vorgesehen, dass der Greifeinsatz in seinem rückseitigen Boden eine umlaufende Nut als Materialschwächung und eine Öffnung zur Montage eines Befestigungsmittels aufweist. Durch Einsatz eines axialen Befestigungsmittels, beispielsweise einer axial angeordneten Schraube, kann einerseits ein Herausrutschen des Greifeinsatzes aus dem umgebenden Gehäuse bei Druckbeaufschlagung sicher ausgeschlossen werden. Andererseits erleichtert die Materialschwächung in Form einer umlaufenden Nut in kontrollierter Weise die notwendige axiale Ausgleichbewegung des Greifeinsatzes, sobald dieser infolge des Druckmediums radial einwärtig verformt wird.

Alternativ oder ergänzend hierzu kann ferner vorgesehen sein, dass der Greifeinsatz an seinem rückseitigen Ende eine Mehrzahl von Hakenelementen aufweist, mittels derer eine Axialbewegung des Greifeinsatz im Gehäuse dadurch verhindert oder begrenzt werden kann, dass die Hakenelemente an einem gehäusefesten Flansch oder Absatz anschlagen.

Die eingangs genannte Aufgabe wird nach einem zweiten Aspekt der vorliegenden Erfindung auch durch eine Packtulpe zum kopfseitigen Ergreifen von insbesondere durch einen Verschluss verschließbaren Flaschen mit einem topfförmigen Gehäuse und einem hülsenförmigen oder topfförmigen, elastisch verformbaren Greifeinsatz nach einem der Ansprüche 1 bis 10, wobei der elastisch verformbare Greifeinsatz an seinem vorderseitigen, im Betrieb der Packtulpe dem Flaschenkopf zugewandten Ende an einem gehäusefesten radial nach innen weisenden Absatz abgestützt ist, gelöst.

Für die Vorteile dieser Packtulpe gelten die vorstehenden Erläuterungen entsprechend.

Nach einer vorteilhaften Ausgestaltung der Packtulpe ist der Greifeinsatz topfförmig ausgebildet. Dabei kann der Greifeinsatz im Gehäuse ferner axial beweglich ausgebildet sein.

Alternativ ist der Greifeinsatz axial am Gehäuse fixiert, um eine Axialbewegung des Greifeinsatzes bei Druckbeaufschlagung der Packtulpe zu verhindern oder zu begrenzen. Eine solche axiale Beweglichkeit muss insbesondere dann begrenzt werden, wenn die Wandstärke des Greifeinsatzes besonders gering gewählt ist, um beispielsweise Flaschenköpfe mit besonders großem Durchmesser zu greifen. Hierbei besteht infolge der geringeren mechanischen Stabilität des Greifeinsatzes die Gefahr eines Herauswölbens aus dem Gehäuse, was zu einer Betriebsunterbrechung führen würde. Ein solches unbeabsichtigtes Herauswölben kann mit der axialen Fixierung sicher verhindert werden. Die axiale Fixierung kann beispielsweise mittels einer Schraubverbindung erfolgen. Nach einer alternativen, besonders vorteilhaften Ausgestaltung der Erfindung weist der Greifeinsatz an seinem rückseitigen Ende eine Mehrzahl von Hakenelementen auf, während das Gehäuse ein korrespondierendes Flanschelement aufweist. Dabei schlagen die Hakenelemente bei Druckbeaufschlagung der Packtulpe und dadurch bewirkter Verformung des Greifeinsatzes an dem Flanschelement an und verhindern oder begrenzen somit eine Axialbewegung des Greifeinsatzes. Eine solche Lösung erleichtert den Austausch des Greifeinsatzes, da keine Schraubverbindung gelöst werden muss.

Ferner kann vorgesehen sein, dass der Außendurchmesser des Greifeinsatzes relativ zum Innendurchmesser des Gehäuses derart bemessen ist, dass sich zwischen der Innenwand des Gehäuses und der Außenseite der umlaufenden Wandung des Greifeinsatzes ein durchgehendes Ringvolumen ausbildet. Der besondere Vorteil dieses Ringvolumens liegt darin, dass durch die gleichmäßige Druckbeaufschlagung über den gesamten Umfang des Greifeinsatzes durch das über den Umfang des Greifeinsatzes durchgehende Ringvolumen ein besonders vorteilhaftes Verformungsverhalten erreicht wird. Insbesondere bei Ausbildung der Außenseite der Wandung des Greifeinsatzes mit einer Mehrzahl über den Umfang des Greifeinsatzes verteilter axialer Stege und geschwächter Bereiche wird durch die alternierende Ausbildung von axialen Stegen und geschwächten Bereichen über den Umfang in einem ersten Schritt die Flasche zunächst von den Wandabschnitten der geschwächten Bereiche vorgegriffen, wobei bei weiter steigendem Druck im Ringvolumen sich anschließend auch die axialen Stege radial einwärts verformen und einen sicheren Halt der Flasche in der Packtulpe gewährleisten. Die Breite des Ringvolumens in radialer Richtung zwischen den Außenseiten der axialen Stege und der Innenwand des Gehäuses kann beispielsweise 0,1 bis 0,5 mm betragen.

Ein weiterer Aspekt der vorliegenden Erfindung betrifft eine Vorrichtung zum kopfseitigen Ergreifen von insbesondere durch einen Verschluss verschließbaren Flaschen mit wenigstens einer Packtulpe nach Anspruch 11 oder 12.

Ein weiterer Aspekt der vorliegenden Erfindung betrifft ein Verfahren zum kopfseitigen Ergreifen einer insbesondere durch einen Verschluss verschließbaren Flasche mithilfe einer Packtulpe nach Anspruch 11 oder 12, wobei bei Druckbeaufschlagung des Greifeinsatzes sich die an der Innenseite der umlaufenden Wandung zwischen den im Wesentlichen axial verlaufenden Nuten angeordneten axialen Wandabschnitte radial einwärtig bewegen, während sich die im Wesentlichen axial verlaufenden Nuten derart einfalten, dass die die Nuten jeweils begrenzenden Nutenkanten einander berühren. wodurch die Verformung des Greifeinsatzes begrenzt wird.

Für die Vorteile des erfindungsgemäßen Verfahrens gelten die vorstehend genannten Vorteile entsprechend. Insbesondere wird durch die Verformungsbegrenzung wirksam vermieden, dass der Greifeinsatz bei Betätigung der Packtulpe (ohne zu greifenen Flaschenhals) sich aus dem Gehäuses herauswölbt bzw. aus diesem herausspringt.

Im Folgenden wird die Erfindung anhand einer ein Ausführungsbeispiel darstellenden Zeichnung näher erläutert. Es zeigen:
- Fig. 1: einen topfförmigen, elastisch verformbaren Greifeinsatz für eine Packtulpe zum kopfseitigen Ergreifen von Flaschen in einer ersten Ausführungsform in seitlicher Ansicht,
- Fig. 2: den Greifeinsatz der Fig. 1 in Längsschnittansicht gemäß der Schnittlinie A-A aus Fig. 1,
- Fig. 3: den Greifeinsatz der Fig. 1 im Querschnitt gemäß Schnittlinie D-D aus Fig. 2,
- Fig. 4: den Greifeinsatz der Fig. 1 im Querschnitt gemäß Schnittlinie C-C aus Fig. 2,
- Fig. 5: der Greifeinsatz der Fig.1 in perspektivischer Ansicht,
- Fig. 6: einen topfförmigen, elastisch verformbaren Greifeinsatz für eine Packtulpe zum kopfseitigen Ergreifen von Flaschen in einer zweiten Ausführungsform in seitlicher Ansicht,
- Fig. 7: den Greifeinsatz der Fig. 6 im Längsschnitt gemäß Schnittlinie A-A aus Fig. 6,
- Fig. 8: den Greifeinsatz der Fig. 6 im Querschnitt gemäß Schnittlinie B-B aus Fig. 7,
- Fig. 9: den Greifeinsatz der Fig. 6 im Querschnitt gemäß Schnittlinie C-C aus Fig. 7,
- Fig. 10: der Greifeinsatz der Fig.6 in perspektivischer Ansicht,
- Fig. 11: einen topfförmigen, elastisch verformbaren Greifeinsatz für eine Packtulpe zum kopfseitigen Ergreifen von Flaschen in einer dritten Ausführungsform in seitlicher Ansicht,
- Fig. 12: den Greifeinsatz der Fig. 11 im Längsschnitt gemäß Schnittlinie A-A aus Fig. 11,
- Fig. 13a, b: den Greifeinsatz der Fig. 11 im Längsschnitt gemäß Schnittlinie B-B aus Fig. 11 sowie die Einzelheit C aus Fig. 13a in vergrößertem Maßstab,
- Fig. 14: den Greifeinsatz der Fig. 11 in perspektivischer Ansicht,
- Fig. 15a-d: eine Packtulpe zum kopfseitigen Ergreifen von Flaschen in einer ersten Ausführungsform in Ruhestellung und in Betriebsstellung im Längsschnitt und im Querschnitt,
- Fig. 16: eine Packtulpe zum kopfseitigen Ergreifen von Flaschen in einer zweiten Ausführungsform im Längsschnitt,
- Fig. 17: eine Packtulpe zum kopfseitigen Ergreifen von Flaschen in einer dritten Ausführungsform im Längsschnitt und
- Fig. 18a,: b eine Packtulpe zum kopfseitigen Ergreifen von Flaschen in einer vierten Ausführungsform im Längsschnitt sowie im Querschnitt gemäß Schnittlinie C-C in Fig. 18a.

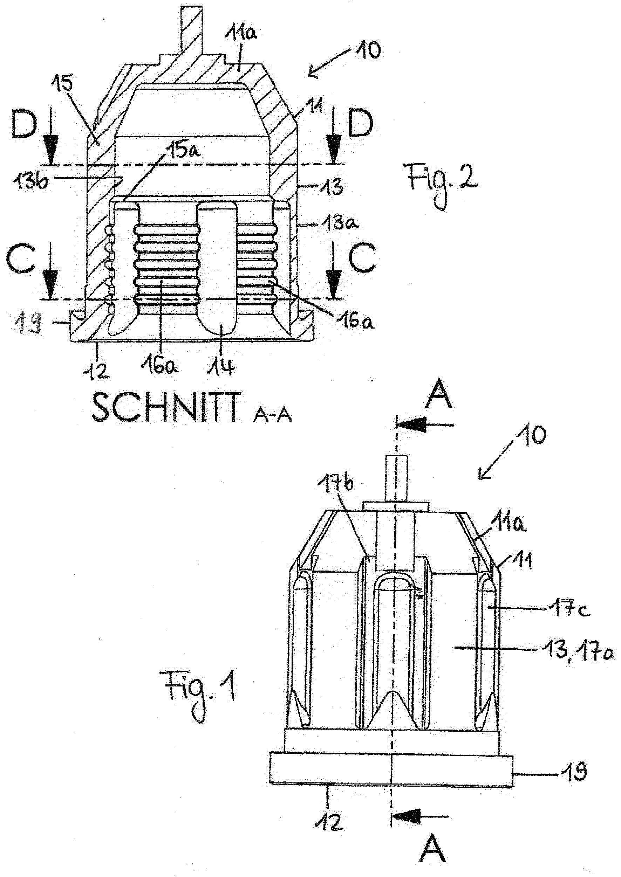

In Fig. 1 ist ein topfförmiger, elastisch verformbarer Greifeinsatz 10 für eine Packtulpe zum kopfseitigen Ergreifen von Flaschen in einer ersten Ausführungsform in seitlicher Ansicht dargestellt. Der Greifeinsatz 10 umfasst ein rückseitiges Ende 11 mit einem Boden 11a, eine umlaufende Wandung 13 mit einer Außenseite 13a und einer Innenseite 13b (s. Fig. 2) sowie ein vorderseitiges, dem Flaschenkopf zugewandtes offenes Ende 12. Ferner umfasst der Greifeinsatz 10 an seinem vorderseitigen Ende 12 einen radial nach außen weisenden Verstärkungskragen 19. Wie in Fig. 1 ferner erkennbar ist, umfasst der Greifeinsatz 10 an der Außenseite 13a der umlaufenden Wandung 13 erfindungsgemäß eine Mehrzahl über den Umfang des Greifeinsatzes 10 verteilter, sich in axialer Richtung erstreckender Stege 17a, die sich über den Umfang des Greifeinsatzes 10 mit geschwächten Bereichen 17b abwechseln. In den geschwächten Bereichen 17b ist jeweils eine Verstärkungsrippe 17c vorgesehen.

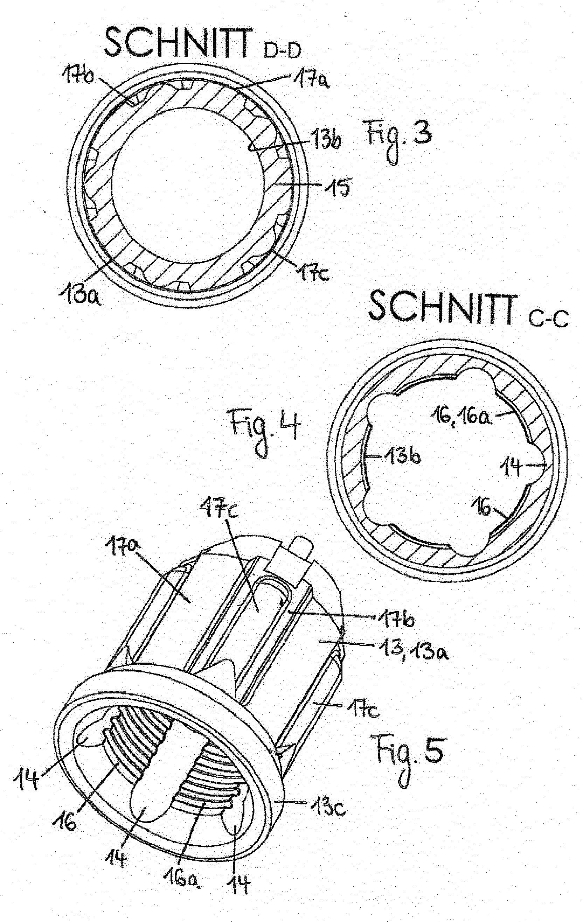

Wesentliche erfindungsgemäße Merkmale des Greifeinsatzes 10 sind in den Fig. 2 bis 5 erkennbar. So zeigt Fig. 2 den Greifeinsatz 10 aus Fig. 1 im Längsschnitt gemäß der Schnittlinie A-A aus Fig. 1, wobei hier erkennbar ist, dass die umlaufende Wandung 13 eine Außenseite 13a und eine Innenseite 13b umfasst. Wie insbesondere in Fig. 4 zu sehen, weist dabei die umlaufende Wandung 13 des Greifeinsatzes 10 an ihrer Innenseite 13b über ihren Umfang verteilt eine Mehrzahl von axialen Schwächungen in Form axial verlaufender Nuten 14 mit halbkreisförmigem Querschnitt auf. Fig. 2 zeigt weiterhin, dass ein am rückseitigen Ende 11 des Greifeinsatzes 10 angeordneter Längsabschnitt 15 der umlaufenden Wandung 13 an deren Innenseite 13b eine erhöhte Wandstärke aufweist. Dieser geht über einen schmalen konischen Abschnitt 15a in den Axialbereich über, in welchem die axial verlaufenden Nuten 14 vorgesehen sind. Der besondere Vorteil der axial verlaufenden Nuten 14 in Kombination mit der innenseitig erhöhten Wandstärke des Längsabschnitts 15 der umlaufenden Wandung 13 ist, dass ein besonderes schonendes Greifen der Flaschen mit exzellenter Zentrierwirkung erreicht wird und trotz der Materialschwächung durch die Nuten 14 dennoch eine hinreichende mechanische Stabilität infolge der erhöhten Wandstärke im rückseitigen Bereich der Wandung 13 sichergestellt ist, so dass ein versehentliches Herauswölben des gesamten Greifeinsatzes aus dem Gehäuse sicher vermieden wird.

In den zwischen den im Wesentlichen axial verlaufenden Nuten 14 angeordneten Wandabschnitten 16 der umlaufenden Wandung 13 des Greifeinsatzes 10 sind in Umfangsrichtung des Greifeinsatzes 10 ausgerichtete Rillen 16a vorgesehen, wobei jeder Wandabschnitt 16 eine identische Anzahl Rillen 16a aufweist. Diese bilden eine Mehrzahl durch die Nuten 14 unterbrochener Ringnuten aus. Mittels dieser Ringnuten kann insbesondere bei einer zu greifenden PET-Flasche der unterhalb des Schraubverschlusses der PET-Flasche angeordnete Kunststoffring, welcher den Schraubverschluss in der Regel radial überragt, sicher gegriffen werden.

Der Schnitt D-D der Fig. 3 zeigt nochmals die erhöhte Wandstärke des Greifeinsatzes 10 im rückseitigen Bereich der umlaufenden Wandung 13. Erkennbar sind zudem hier, wie auch in Fig. 5, die erfindungsgemäß über den Umfang des Greifeinsatzes 10 verteilten, sich in axialer Richtung erstreckender Stege 17a, die sich über den Umfang des Greifeinsatzes 10 mit geschwächten Bereichen 17b (jeweils mit Verstärkungsrippen 17c) abwechseln. Der Schnitt C-C der Fig. 4 zeigt insbesondere die Halbkreisform der Querschnitte der Nuten 14.

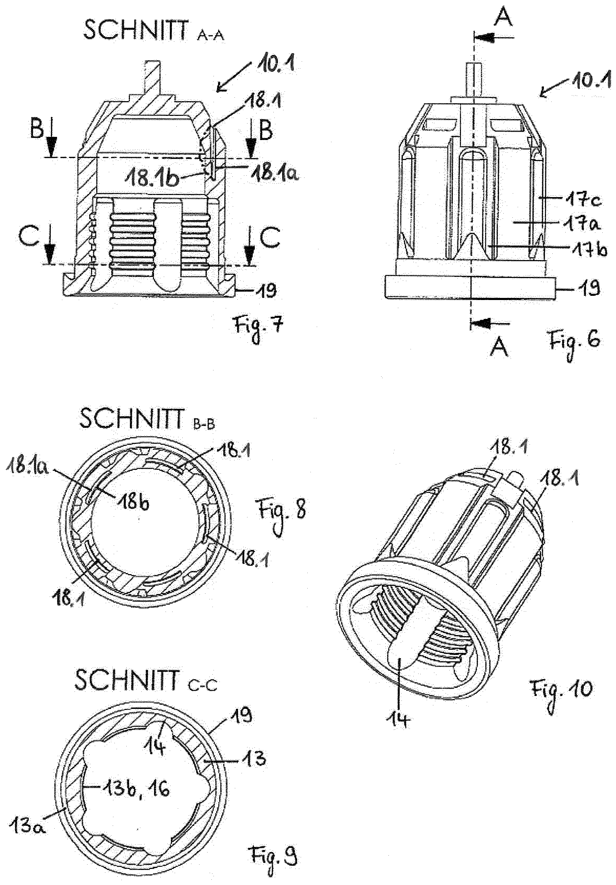

In den Fig. 6-10 ist ein topfförmiger, elastisch verformbarer Greifeinsatz 10.1 für eine Packtulpe zum kopfseitigen Ergreifen von Flaschen in einer zweiten Ausführungsform dargestellt. Der Greifeinsatz der Fig. 6-10 unterscheidet sich vom Greifeinsatz 10 der Fig. 1-5 dadurch, dass in der umlaufenden Wandung 13 des Greifeinsatzes 10.1 eine Mehrzahl zum rückseitigen Ende 11 des Greifeinsatz 10.1 geöffneter taschenförmiger Einschnitte 18.1 vorgesehen ist. Diese weisen jeweils eine äußere Taschenwand 18a und eine innere Taschenwand 18b auf und sind ferner mittels eines Druckmediums radial spreizbar unter radial einwärtiger Verformung insbesondere der inneren Taschenwand 18b ausgebildet, wie durch die strichpunktierte Linie in Fig. 7 angedeutet ist. Durch diese Verformung bildet sich im Betrieb des Greifeinsatzes 10.1 ein weiterer Anlagepunkt an den Flaschenkopf aus, so dass einer unerwünschten Pendelbewegung der Flasche im Greifeinsatz vorgebeugt wird.

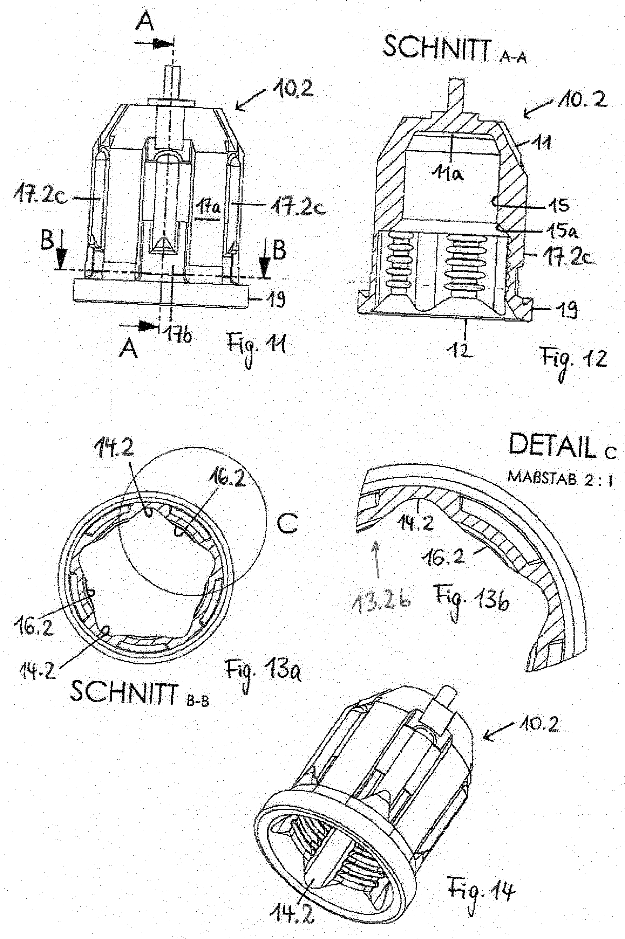

In den Fig. 11-14 ist ein weiterer topfförmiger, elastisch verformbarer Greifeinsatz 10.2 für eine Packtulpe zum kopfseitigen Ergreifen von Flaschen in einer dritten Ausführungsform in verschiedenen Ansichten gezeigt. Wie insbesondere in der Seitenansicht der Fig. 11 erkennbar, sind an der Außenseite 13a der umlaufenden Wandung 13 des Greifeinsatzes 10.2 eine Mehrzahl über den Umfang des Greifeinsatzes 10.2 verteilter, sich in axialer Richtung erstreckender Stege 17a ausgebildet sind, wobei sich die axialen Stege über den Umfang des Greifeinsatzes 10.2 mit geschwächten Bereichen 17b abwechseln. Ferner ist in jedem geschwächten Bereich 17b eine Verstärkungsrippe 17.2c angeordnet. Dabei sind die Verstärkungsrippen 17.2c gegenüber zum vorderseitigen Ende 12 des Greifeinsatzes 10.2 hin verkürzt ausgebildet, so dass hier ein vorderseitiger Axialbereich des Greifeinsatzes 10.2 mit einer Materialschwächung ausgebildet ist. Dies führt zu einer besonders guten Verformbarkeit des Greifeinsatzes 10.2 in diesem Axialbereich und damit zu einem weiteren Anlagepunkt am Hals der zu greifenden Flasche.

In der Schnittansicht B-B der Fig. 13a und insbesondere in der vergrößerten Einzelheit C der Fig. 13b ist erkennbar, dass die an der Innenseite 13.2b der umlaufenden Wandung des Greifeinsatzes 10.2 angeordneten axial verlaufenden Nuten 14.2 keinen halbkreisförmigen Querschnitt mehr, sondern abgeschrägte Flanken aufweisen, so dass die Nuten 14.2 sehr stetig in die zwischen den Nuten 14.2 angeordneten Wandabschnitte 16.2 übergehen.

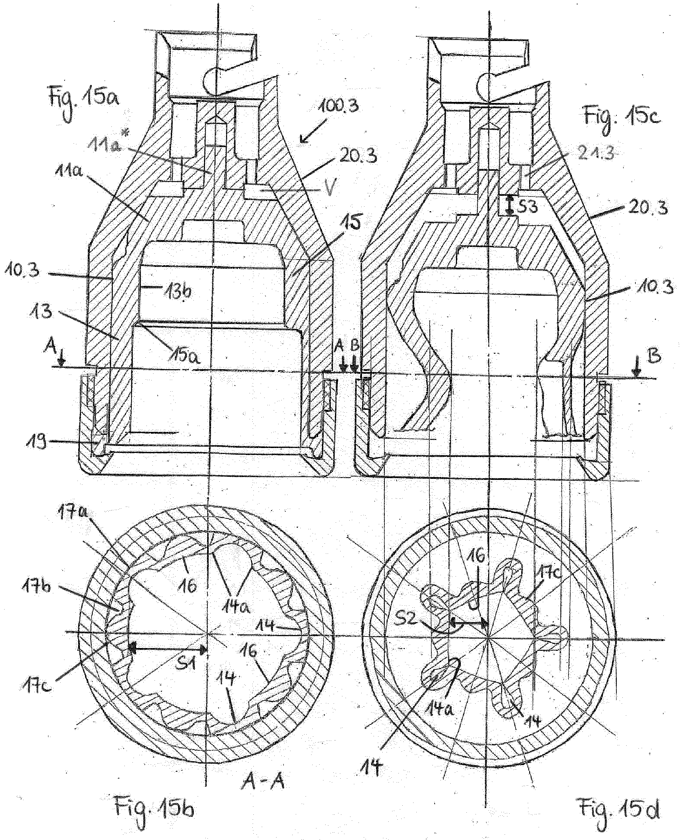

Die Fig. 15a-d zeigen nun eine Packtulpe 100.3 zum kopfseitigen Ergreifen von Flaschen in einer ersten Ausführungsform mit einem Gehäuse 20.3 und einem topfförmigen, elastisch verformbaren Greifeinsatz 10.3 im Längsschnitt und Querschnitt in Ruhestellung (Fig. 15a, b) sowie bei Druckbeaufschlagung der Packtulpe 100.3 (Fig. 15c, d). Der Greifeinsatz 10.3 dieser Packtulpe 100.3 unterscheidet sich von dem der Fig. 1-5 nur dadurch, dass bei dem Greifeinsatz 10.3 der Fig. 15a-d in den zwischen den im Wesentlichen axial verlaufenden Nuten 14 angeordneten Wandabschnitten 16 keine Rillen vorgesehen sind. Dementsprechend weist der Greifeinsatz 10.3 neben den axial ausgerichteten Nuten 14 mit halbkreisförmigem Querschnitt auch einen am rückseitigen Ende 11 des Greifeinsatzes 10.3 angeordneten Längsabschnitt 15 der umlaufenden Wandung 13 mit erhöhter Wandstärke auf.

Wie ferner in den Längsschnittansichten der Fig. 15a und c erkennbar ist, weit der Boden 11a des Greifeinsatzes 10.3 einen zentralen Zapfen 11 a* auf, welcher in einer korrespondierenden Führung im Gehäuse 20.3 der Packtulpe 100.3 axial beweglich ist. Wie an sich aus dem Stand der Technik bekannt, ist der Greifeinsatz 10.3 an einem gehäusefesten, radial nach innen weisenden Absatz abgestützt. Dies erfolgt vorliegend über den radial nach außen weisenden Verstärkungskragen 19. Der gehäusefeste Absatz wird vorliegende durch eine auf das Gehäuse 20.3 aufgeschraubte Überwurfmutter bereitgestellt, die eine Klemmung des Verstärkungskragen 19 bewirkt.

Was in den Fig. 15-18 aus zeichnerischen Gründen nicht erkennbar, gleichwohl aber in den dargestellten Packtulpen 100.3, 100.4, 100.5, 100.6 jeweils vorgesehen ist, ist ein zwischen der Innenwand des Gehäuses 20.3, 20.4, 20.5, 20.6 und der Außenseite 13a der umlaufenden Wandung 13 des Greifeinsatzes 10.3, 10.4, 10.5, 10.6 ausgebildetes durchgehendes Ringvolumen. Dieses dient einer besonders gleichmäßigen Druckbeaufschlagung des gesamten Greifeinsatzes 10.3, 10.4, 10.5, 10.6.

Das Verhalten des Greifeinsatzes 10.3 bei Druckbeaufschlagung ist in den Fig. 15c und d dargestellt. Bei Betätigung der Packtulpe 100.3 wird über Kanäle 21.3 ein Druckmedium, vorliegenden Druckluft, in das freie Volumen V zwischen dem Gehäuse 20.3 und dem Greifeinsatz 10.3 eingeleitet. Hierzu gehört auch das Ringvolumen zwischen der Innenwand des Gehäuses 20.3 und der Außenseite 13a der umlaufenden Wandung 13 des Greifeinsatzes 10.3. Dabei verformt sich der elastische Greifeinsatz 10.3 einerseits insbesondere durch radial einwärtige Biegung des Materials der zwischen den außenseitigen Stegen 17a angeordneten geschwächten Bereich 17b, wobei, wie in der Querschnittsansicht der Fig. 15d dargestellt, der Radius der Wandabschnitte 16 (Innenseite der geschwächten Bereiche 17b) sich von einem Ausgangswert S1 im Bereich der maximalen Biegung auf einen Wert S2 im Wesentlichen halbiert. Andererseits wird der Greifeinsatz 10.3 infolge der Druckbeaufschlagung über die in Fig. 15c eingezeichnete Strecke S3 axial bewegt, wobei die Axialbewegung S3 etwa dem halben minimalen Radius S2 entspricht.

Wie in Fig. 15d ferner erkennbar ist, stoßen die axialen Außenkanten 14a der halbkreisförmigen, axial verlaufenden Nuten 14 bei maximaler Verformung des Greifeinsatzes 10.3 im Gehäuse 20.3 aneinander, begrenzen somit die Verformung und verhindern ein unbeabsichtigtes Herauswölben des Greifeinsatzes 10.3 aus dem Gehäuse 20.3. Ferner ist entscheidend, dass es bei der beschriebenen Biegung infolge der Druckbeaufschlagung nicht zu einer materialschädigenden Knickung kommt, so dass eine lange Standzeit der Packtulpe sichergestellt ist.

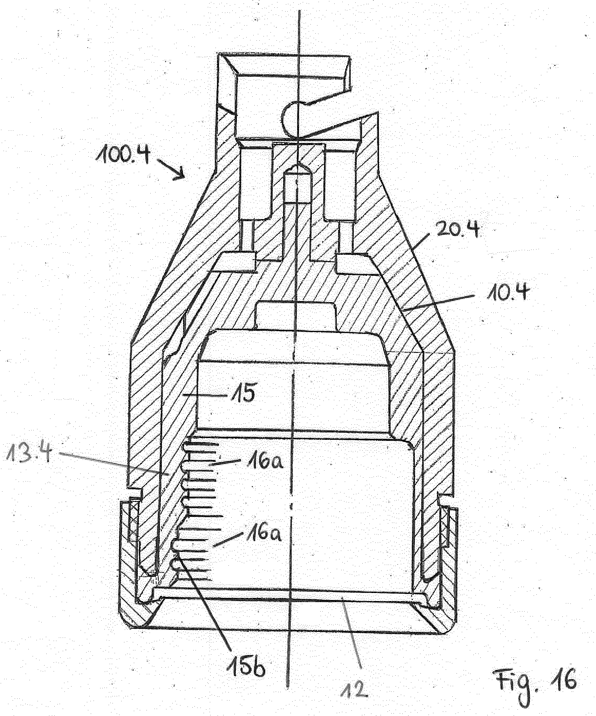

Fig. 16 zeigt eine zweite Ausführungsform einer Packtulpe 100.4 mit Gehäuse 20.4 und elastisch verformbarem Greifeinsatz 10.4. Hier weisen die zwischen den axial verlaufenden Nuten (nicht dargestellt in Fig. 16) angeordneten Wandabschnitte entsprechend Fig. 2 in Umfangsrichtung des Greifeinsatzes 10.4 ausgerichtete Rille 16a auf, wobei erkennbar ist, dass die Wandung 13.4 des Greifeinsatzes 10.4 im Bereich seines vorseitigen Endes 12 einen Längsabschnitt mit reduzierter Wandstärke 15b aufweist, derart, dass sich die Wandstärke der umlaufenden Wandung 13.4 vom rückseitigen Ende des Greifeinsatzes 10.4 bis zu seinem vorderseitigen Ende 12 zweifach abgestuft reduziert. Hierdurch können beispielsweise PET-Flaschen mit unterhalb des Schraubverschlusses vorgesehenem Kunststoffring mit unterschiedlichen Durchmessern sicher gegriffen werden.

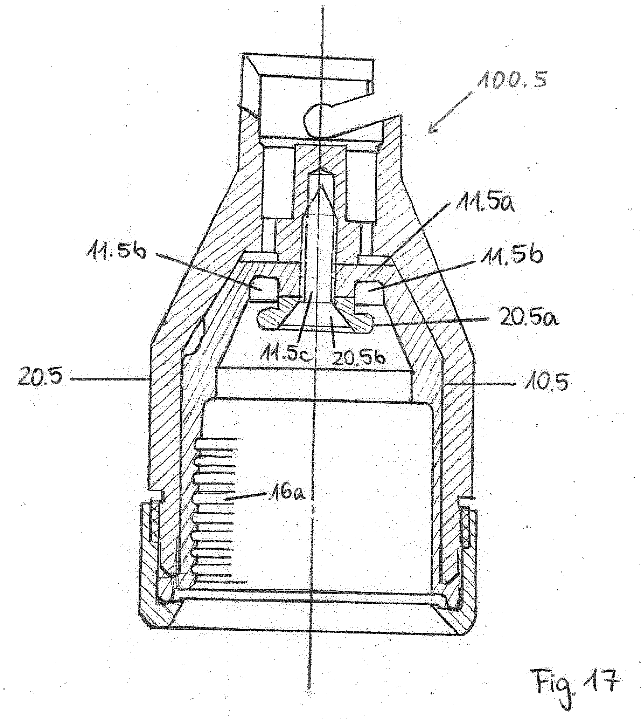

In Fig. 17 ist eine Packtulpe 100.5 mit Gehäuse 20.5 und elastisch verformbarem Greifeinsatz 10.5 in einer dritten Ausführungsform im Längsschnitt dargestellt. Die Besonderheit dieser Packtulpe besteht darin, dass der Greifeinsatz 10.5 in seinem Boden 11.5a eine zentrale Öffnung 11.5c aufweist, über welche ein Flanschelement 20.5a des Gehäuses 20.5 den Greifeinsatz 10.5 mittels Schraubverbindung 20.5b axial sichert, so dass ein Herauswölben oder -springen des Greifeinsatzes 10.5 im Betrieb der Packtulpe 100.5 ausgeschlossen ist. Gleichwohl ist eine Axialbewegung des Greifeinsatzes 10.5 möglich. Hierzu weist der Greifeinsatz 10.5 in seinen Boden 11.5a eine eingeformte Ringnut 11.5b auf, welche eine gezielte Materialschwächung darstellt und damit eine gewisse Axialbewegung des Greifeinsatzes 10.5 ermöglicht, obwohl dieser, wie beschrieben, am Gehäuse 20.5 gesichert ist.

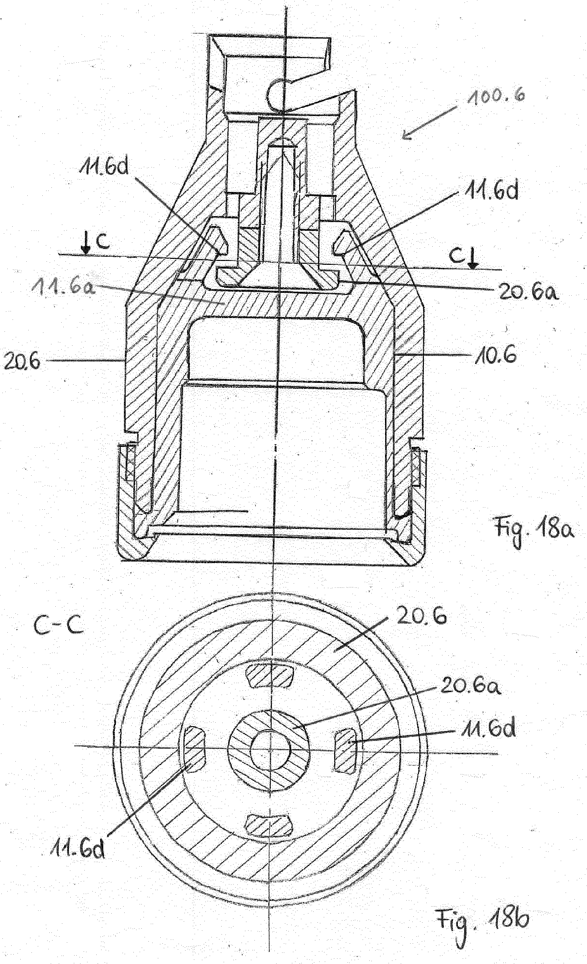

In Fig. 18a, b schließlich ist eine Packtulpe 100.6 mit Gehäuse 20.6 und elastisch verformbarem Greifeinsatz 10.6 in einer vierten Ausführungsform im Längsschnitt sowie im Querschnitt dargestellt. Wiederum weist das Gehäuse 20.6 ein Flanschelement 20.6a zur axialen Sicherung des Greifeinsatzes 10.6 auf. Allerdings erfolgt die axiale Sicherung nicht mittels Schraubverbindung, sondern über eine Mehrzahl von am Boden 11.6a des Greifeinsatzes 10.6 vorgesehene Hakenelemente 11.6d. Bei Druckbeaufschlagung des Greifeinsatzes 10.6 und dadurch bewirkter Axialbewegung desselben schlagen die Hakenelemente 11.6d nach einer durch entsprechende Auslegung der Hakenelemente 11.6d definierten Strecke rückseitig an das zentrale Flanschelement 20.6a des Gehäuses 20.6 an, so dass die Axialbewegung des Greifeinsatzes 10.6 wirksam begrenzt wird.

## Patentansprüche

1. Hülsenförmiger oder topfförmiger, elastisch verformbarer Greifeinsatz (10, 10.1, 10.2, 10.3, 10.4, 10.5, 10.6) für eine Packtulpe (100.3, 100.4, 100.5, 100.6) zum kopfseitigen Ergreifen von insbesondere durch einen Verschluss verschließbaren Flaschen mit einem rückseitigen Ende (11), einer umlaufenden Wandung (13) mit einer Außenseite (13a) und einer Innenseite (13b) sowie einem vorderseitigen, dem Flaschenkopf zugewandten Ende (12),
**dadurch gekennzeichnet, dass**
die umlaufende Wandung (13) des Greifeinsatzes (10, 10.1, 10.2, 10.3, 10.4, 10.5, 10.6) an ihrer Innenseite (13b) über ihren Umfang verteilt eine Mehrzahl von axialen Schwächungen in Form im Wesentlichen axial verlaufender Nuten (14) aufweist,
wobei ein am rückseitigen Ende des Greifeinsatzes (10, 10.1, 10.2, 10.3, 10.4, 10.5, 10.6) angeordneter Längsabschnitt (15) der umlaufenden Wandung (13) an dessen Innenseite (13b) eine erhöhte Wandstärke aufweist, wobei an der Außenseite (13a) der umlaufenden Wandung (13) des Greifeinsatzes (10, 10.1-10.6) eine Mehrzahl über den Umfang des Greifeinsatzes (10-10.6) verteilter, sich in axialer Richtung erstreckender Stege (17a) ausgebildet sind, wobei sich die axialen Stege über den Umfang des Greifeinsatzes (10-10.6) mit geschwächten Bereichen (17b) abwechseln, wobei die Anzahl der sich in axialer Richtung erstreckenden Stege (17a) der Anzahl der an der Innenseite (13b) der umlaufenden Wandung (13) vorgesehenen, im Wesentlichen axial verlaufenden Nuten (14) entspricht, wobei die Stege (17a) und die Nuten (14) in radialer Richtung paarweise übereinander liegen, wobei bei der Verformung des Greifeinsatzes (10-10.6) unter Druckbeaufschlagung die äußeren Längskanten (14a) der Nuten (14) zur Begrenzung der Verformung dienen, indem sie bei zunehmender Verformung aneinanderstoßen und somit eine weitere radial einwärtige Bewegung der umlaufenden Wandung (13) des Greifeinsatzes (10-10.6) verhindern.

2. Greifeinsatz (10, 10.1, 10.3, 10.4, 10.5, 10.6) nach Anspruch 1,
**dadurch gekennzeichnet, dass**
die im Wesentlichen axial verlaufenden Nuten (14) einen runden, insbesondere kreisrunden, Querschnitt aufweisen.

3. Greifeinsatz (10, 10.1, 10.2, 10.3, 10.4, 10.5, 10.6) nach Anspruch 1 oder 2, **dadurch gekennzeichnet, dass**
die Erhöhung der Wandstärke stufenförmig ausgebildet ist.

4. Greifeinsatz (10, 10.1, 10.2, 10.4, 10.5) nach einem der Ansprüche 1 bis 3,
**dadurch gekennzeichnet, dass**
die an der Innenseite (13b) der umlaufenden Wandung (13) zwischen den im Wesentlichen axial verlaufenden Nuten (14) angeordneten Wandabschnitte (16) eine identische Anzahl von in Umfangsrichtung des Greifeinsatzes (10, 10.1, 10.2, 10.4, 10.5) ausgerichteten Rillen (16a) aufweisen, wobei jeweils einander zugeordnete Rillen (16a) der Wandabschnitte (16) gemeinsam eine durch die im Wesentlichen axial verlaufenden Nuten (14) unterbrochene Ringnut ausbilden.

5. Greifeinsatz (10.4) nach einem der Ansprüche 1 bis 4,
**dadurch gekennzeichnet, dass**
die Wandstärke der umlaufenden Wandung (13) des Greifeinsatzes (10.4) im Bereich seines vorseitigen Endes (12) einen Längsabschnitt mit reduzierter Wandstärke (15b) aufweist, derart, dass sich die Wandstärke der umlaufenden Wandung (13) vom rückseitigen Ende (11) des Greifeinsatzes (10.4) bis zu seinem vorderseitigen Ende (12) zweifach abgestuft reduziert.

6. Greifeinsatz (10-10.6) nach einem der Ansprüche 1 bis 5,
**dadurch gekennzeichnet, dass**
die geschwächten Bereiche (17b)jeweils eine parallel zu dem jeweiligen geschwächten Bereich (17b) ausgerichtete Verstärkungsrippe (17c) aufweisen.

7. Greifeinsatz (10.1) nach einem der Ansprüche 1 bis 6,
**dadurch gekennzeichnet, dass**
in der umlaufenden Wandung (13) des Greifeinsatzes (10.1) im Bereich seines rückseitigen Endes (11) eine Mehrzahl zum rückseitigen Ende (11) des Greifeinsatz (10.1) geöffneter taschenförmiger Einschnitte (18.1) vorgesehen sind, wobei die taschenförmigen Einschnitte (18.1) jeweils eine äußere Taschenwand (18a) und eine innere Taschenwand (18.1b) aufweisen, wobei die taschenförmigen Einschnitte (18.1) ferner mittels eines Druckmediums radial spreizbar unter radial einwärtiger Verformung der inneren Taschenwand (18.1b) ausgebildet sind.

8. Greifeinsatz (10-10.6) nach einem der Ansprüche 1 bis 7,
**dadurch gekennzeichnet, dass**
der Greifeinsatz (10-10.6) topfförmig mit einem rückseitigen Boden (11a) ausgebildet ist, wobei der Boden(11a) im Längsschnitt des Greifeinsatzes (10-10.6) bevorzugt trapezförmig ausgebildet ist.

9. Greifeinsatz (10.5) nach Anspruch 8,
**dadurch gekennzeichnet, dass,**
der Greifeinsatz (10.5) in seinem rückseitigen Boden (11.5a) eine umlaufende Nut (11.5b) als Materialschwächung und eine Öffnung (11.5c) zur Montage eines Befestigungsmittels aufweist.

10. Greifeinsatz (10.6) nach Anspruch 8 oder 9,
**dadurch gekennzeichnet, dass**
der Greifeinsatz (10.6) an seinem rückseitigen Ende (11.6) eine Mehrzahl von Hakenelementen (11.6d) aufweist und das Gehäuse (20.6) ein korrespondierendes Flanschelement (20.6a) aufweist, wobei die Hakenelemente (11.6d) bei Druckbeaufschlagung der Packtulpe (100.6) und dadurch bewirkter Verformung des Greifeinsatzes (10.6) an dem Flanschelement (20.6a) anschlagen und somit eine Axialbewegung des Greifeinsatzes (10.6) verhindern oder begrenzen.

11. Packtulpe (100.3, 100.4, 100.5, 100.6) zum kopfseitigen Ergreifen von insbesondere durch einen Verschluss verschließbaren Flaschen mit einem topfförmigen Gehäuse (20.3, 20.4, 20.5, 20.6) und einem hülsenförmigen oder topfförmigen, elastisch verformbaren Greifeinsatz (10.3, 10.4, 10.5, 10.6) nach einem der Ansprüche 1 bis 10, wobei der elastisch verformbare Greifeinsatz (10.3, 10.4, 10.5, 10.6) an seinem vorderseitigen, im Betrieb der Packtulpe (100.3, 100.4, 100.5, 100.6) dem Flaschenkopf zugewandten Ende (12) an einem gehäusefesten radial nach innen weisenden Absatz abgestützt ist.

12. Packtulpe (100.3, 100.4, 100.5, 100.6) nach Anspruch 11,
**dadurch gekennzeichnet, dass**
der Außendurchmesser des Greifeinsatzes (10.3, 10.4, 10.5, 10.6) relativ zum Innendurchmesser des Gehäuses (20.3, 20.4, 20.5, 20.6) derart bemessen ist, dass sich zwischen der Innenwand des Gehäuses (20.3, 20.4, 20.5, 20.6) und der Außenseite (13a) der umlaufenden Wandung (13) des Greifeinsatzes (10.3, 10.4, 10.5, 10.6) ein durchgehendes Ringvolumen ausbildet.

13. Vorrichtung zum kopfseitigen Ergreifen von insbesondere durch einen Verschluss verschließbaren Flaschen mit wenigstens einer Packtulpe (100.3, 100.4, 100.5, 100.6) nach Anspruch 11 oder 12.

14. Verfahren zum kopfseitigen Ergreifen einer insbesondere durch einen Verschluss verschließbaren Flasche mithilfe einer Packtulpe (100.3, 100.4, 100.5, 100.6) nach Anspruch 11 oder 12, wobei bei Druckbeaufschlagung des Greifeinsatzes (10.3, 10.4, 10.5, 10.6) sich die an der Innenseite (13b) der umlaufenden Wandung (13) zwischen den im Wesentlichen axial verlaufenden Nuten (14) angeordneten axialen Wandabschnitte (16) radial einwärtig bewegen, während sich die im Wesentlichen axial verlaufenden Nuten (14) derart einfalten, dass die die Nuten (14) jeweils begrenzenden Nutenkanten (14a) einander berühren. wodurch die Verformung des Greifeinsatzes (10.3, 10.4, 10.5, 10.6) begrenzt wird.

## Claims

1. A sleeve-shaped or cup-shaped, elastically deformable gripping insert (10, 10.1, 10.2, 10.3, 10.4, 10.5, 10.6) for a packing tulip (100.3, 100.4, 100.5, 100.6) for gripping bottles on the head side, in particular bottles closable by a closure, comprising a rear side end (11), a circumferential wall (13) with an outer side (13a) and an inner side (13b) and also a front side end (12) facing the bottle head,
**characterized in that**
the circumferential wall (13) of the gripping insert (10, 10.1, 10.2, 10.3, 10.4, 10.5, 10.6) has a plurality of axial weakenings in the form of grooves (14) extending substantially axially and distributed across its circumference on its inner side (13b), wherein a longitudinal section (15) of the circumferential wall (13) arranged on the rear side end of the gripping insert (10, 10.1, 10.2, 10.3, 10.4, 10.5, 10.6) has an increased wall thickness on its inner side (13b), wherein a plurality of webs (17a) is formed on the outer side (13a) of the circumferential wall (13) of the gripping insert (10, 10.1-10.6) extending in the axial direction and distributed across the circumference of the gripping insert (10-10.6), wherein the axial webs alternate with the weakened areas (17b) across the circumference of the griping insert (10-10.6), wherein the number of webs (17a) extending in the axial direction corresponds to the number of grooves (14) extending substantially axially and provided on the inner side (13b) of the circumferential wall (13), wherein the webs (17a) and the grooves (14) lie over each other in pairs in the radial direction, wherein, during the deformation of the gripping insert (10-10.6) when pressure is applied, the outer longitudinal edges (14a) of the grooves (14) function to limit the deformation, by abutting one another at increasing deformation and thus preventing a further, radially inward movement of the circumferential wall (13) of the gripping insert (10-10.6).

2. The gripping insert (10, 10.1, 10.3, 10.4, 10.5, 10.6) according to claim 1,
**characterized in that**
the grooves (14) extending substantially axially have a round, in particular a circular cross section.

3. The gripping insert (10, 10.1, 10.2, 10.3, 10.4, 10.5, 10.6) according to claim 1 or 2,
**characterized in that**
the increase of the wall thickness is formed in steps.

4. The gripping insert (10, 10.1, 10.2, 10.4, 10.5) according to one of claims 1 to 3,
**characterized in that**
the wall sections (16), arranged on the inner side (13b) of the circumferential wall (13) between the grooves (14) extending substantially axially, have an identical number of corrugations (16a) aligned in the circumferential direction of the gripping insert (10, 10.1, 10.2, 10.4, 10.5), wherein corrugations (16a) of the wall section (16), respectively assigned to one another, mutually form an annular groove interrupted by the grooves (14) extending substantially axially.

5. The gripping insert (10.4) according to one of claims 1 to 4,
**characterized in that**,
the wall thickness of the circumferential wall (13) of the gripping insert (10.4) has a longitudinal section with a reduced wall thickness (15b) in the area of its front end (12) such that the wall thickness of the circumferential wall (13) is reduced in two steps from the rear end (11) of the gripping insert (10.4) up to its front end (12).

6. The gripping insert (10-10.6) according to one of claims 1 to 5,
**characterized in that**,
the weakened areas (17b) each have a reinforcing rib (17c) aligned parallel to the respective weakened area (17b) .

7. The gripping insert (10.1) according to one of claims 1 to 6,
**characterized in that**,
a plurality of pocket-shaped incisions (18.1), open toward the rear end (11) of the gripping insert (10.1), are provided in the circumferential wall (13) of the gripping insert (10.1) in the area of its rear end (11), wherein the pocket-shaped incisions (18.1) each have an outer pocket wall (18a) and an inner pocket wall (18.1b), wherein the pocket-shaped incisions (18.1) are further designed to be radially expandable by means of a pressure medium during radially inward deformation of the inner pocket wall (18.1b).

8. The gripping insert (10-10.6) according to one of claims 1 to 7,
**characterized in that**,
the gripping insert (10-10.6) is designed as cup-shaped with a rear side bottom (11a), wherein the bottom (11a) is preferably designed as trapezoidal in the longitudinal cross section of the gripping insert (10-10.6) .

9. The gripping insert (10.5) according to claim 8, **characterized in that**,
the gripping insert (10.5) has a circumferential groove (11.5b) as a material weakening in its rear side bottom (11.5a) and has an opening (11.5c) for mounting a fastening means.

10. The gripping insert (10.6) according to claim 8 or 9, **characterized in that**,
the gripping insert (10.6) has a plurality of hook elements (11.6d) on its rear end (11.6) and the housing (20.6) has a corresponding flange element (20.6a), wherein the hook elements (11.6d) abut against the flange element (20.6a) during the application of pressure on the packing tulip (100.6) and the deformation of the gripping insert (10.6) caused thereby, and thus prevent or limit an axial movement of the gripping insert (10.6).

11. A packing tulip (100.3, 100.4, 100.5, 100.6) for gripping bottles on the head side, in particular bottles closable by a closure, comprising a cup-shaped housing (20.3, 20.4, 20.5, 20.6) and a sleeve-shaped or cup-shaped, elastically deformable gripping insert (10.3, 10.4, 10.5, 10.6) according to one of claims 1 to 10, wherein the elastically deformable gripping insert (10.3, 10.4, 10.5, 10.6) is supported on its front end (12), which faces the bottle head during operation of the packing tulip (100.3, 100.4, 100.5, 100.6), on a shoulder fixed to the housing and pointing radially inward.

12. The packing tulip (100.3, 100.4, 100.5, 100.6) according to claim 11,
**characterized in that**
the outer diameter of the gripping insert (10.3, 10.4, 10.5, 10.6) is dimensioned relative to the inner diameter of the housing (20.3, 20.4, 20.5, 20.6) in such a way that a continuous annular volume is formed between the inner wall of the housing (20.3, 20.4, 20.5, 20.6) and the outer side (13a) of the circumferential wall (13) of the gripping insert (10.3, 10.4, 10.5, 10.6) .

13. A device for gripping bottles on the head side, in particular bottles closable by a closure, comprising at least one packing tulip (100.3, 100.4, 100.5, 100.6) according to claim 11 or 12.

14. A method for gripping bottles on the head side, in particular bottles closable by a closure, by means of a packing tulip (100.3, 100.4, 100.5, 100.6) according to claim 11 or 12, wherein, during the application of pressure on the gripping insert (10.3, 10.4, 10.5, 10.6), the axial wall sections (16), arranged between the grooves (14), extending substantially axially on the inner side (13b) of the circumferential wall (13), move radially inward, while the grooves (14), extending substantially axially, fold inward in such a way that the groove edges (14a) respectively delimiting the grooves (14) abut one another, by which means the deformation of the gripping insert (10.3, 10.4, 10.5, 10.6) is limited.

## Revendications

1. Insert de préhension (10, 10.1, 10.2, 10.3, 10.4, 10.5, 10.6) en forme de manchon ou en forme de pot, élastiquement déformable pour une tulipe d'emballage (100.3, 100.4, 100.5, 100.6) pour la saisie côté tête de bouteilles pouvant être fermées en particulier par une fermeture avec une extrémité arrière (11), une paroi périphérique (13) avec un côté extérieur (13a) et un côté intérieur (13b) ainsi qu'une extrémité avant (12) tournée vers la tête de bouteille,
**caractérisé en ce que**
la paroi périphérique (13) de l'insert de préhension (10, 10.1, 10.2, 10.3, 10.4, 10.5, 10.6) comporte sur son côté intérieur (13b) répartie sur sa périphérie, une pluralité d'affaiblissements axiaux sous la forme de rainures (14) passant pour l'essentiel axialement,
sachant qu'une section longitudinale (15) de la paroi périphérique (13) disposée à l'extrémité arrière de l'insert de préhension (10, 10.1, 10.2, 10.3, 10.4, 10.5, 10.6) comporte sur son côté intérieur (13b) une épaisseur de paroi augmentée , sachant que sur le côté extérieur (13a) de la paroi périphérique (13) de l'insert de préhension (10, 10.1-10.6) est constituée une pluralité de nervures (17a) réparties sur la périphérie de l'insert de préhension (10-10.6), s'étendant dans la direction axiale, sachant que les nervures axiales alternent sur la périphérie de l'insert de préhension (10-10.6) avec des zones affaiblies (17b), sachant que le nombre des nervures (17a) s'étendant en direction axiale correspond au nombre des rainures (14) prévues sur le côté intérieur (13b) de la paroi périphérique (13), passant pour l'essentiel axialement, sachant que les nervures (17a) et les rainures (14) se situent par paires l'une sur l'autre en direction radiale, sachant que lors de la déformation de l'insert de préhension (10-10.6) les bords longitudinaux (14a) extérieurs des rainures (14) servent à limiter la déformation lors de l'application de la pression dans la mesure où ils se rencontrent lors de la déformation croissante et évitent ainsi un autre mouvement dirigé radialement vers l'intérieur de la paroi périphérique (13) de l'insert de préhension (10-10.6).

2. Insert de préhension (10, 10.1, 10.3, 10.4, 10.5, 10.6) selon la revendication 1,
**caractérisé en ce que**
les rainures (14) passant pour l'essentiel axialement comportent une section transversale ronde, en particulier circulaire.

3. Insert de préhension (10, 10.1, 10.2, 10.3, 10.4, 10.5, 10.6) selon la revendication 1 ou 2,
**caractérisé en ce que**
l'augmentation de l'épaisseur de paroi est constituée en gradins.

4. Insert de préhension (10, 10.1, 10.2, 10.4, 10.5) selon l'une quelconque des revendications 1 à 3, **caractérisé en ce que**
les sections de paroi (16) disposées sur le côté intérieur (13b) de la paroi périphérique (13) entre les rainures (14) passant pour l'essentiel axialement comportent un nombre identique de cannelures (16a) orientées dans la direction périphérique de l'insert de préhension (10, 10.1, 10.2, 10.4, 10.5), sachant que les cannelures (16a) des sections de paroi (16) attribuées respectivement les unes aux autres constituent en commun une rainure annulaire ininterrompue à travers les rainures (14) passant pour l'essentiel axialement.

5. Insert de préhension (10.4) selon l'une quelconque des revendications 1 à 4,
**caractérisé en ce que**
l'épaisseur de paroi de la paroi périphérique (13) de l'insert de préhension (10.4) comporte dans la zone de son extrémité avant (12) une section longitudinale avec une épaisseur de paroi réduite (15b) de telle manière que l'épaisseur de paroi de la paroi périphérique (13) se réduit deux fois de façon échelonnée de l'extrémité arrière (11) de l'insert de préhension (10.4) jusqu'à son extrémité avant (12).

6. Insert de préhension (10-10.6) selon l'une quelconque des revendications 1 à 5,
**caractérisé en ce que**
les zones affaiblies (17b) comportent respectivement une nervure de renfort (17c) orientée parallèlement à la zone affaiblie respective (17b).

7. Insert de préhension (10.1) selon l'une quelconque des revendications 1 à 6,
**caractérisé en ce qu'**
une pluralité d'entailles (18.1) en forme de poche ouvertes vers l'extrémité arrière (11) de l'insert de préhension (10.1) est prévue dans la paroi périphérique (13) de l'insert de préhension (10.1) dans la zone de son extrémité arrière (11), sachant que les entailles (18.1) en forme de poche comportent respectivement une paroi de poche (18a) extérieure et une paroi de poche (18.1b) intérieure, sachant que les entailles (18.1) en forme de poche sont constituées en plus radialement extensibles au moyen d'un moyen de pression par déformation radialement vers l'intérieur de la paroi de poche (18.1b) intérieure.

8. Insert de préhension (10-10.6) selon l'une quelconque des revendications 1 à 7,
**caractérisé en ce que**
l'insert de préhension (10-10.6) est constitué en forme de pot avec un fond arrière (11a), sachant que le fond (11a) est constitué de préférence de forme trapézoïdale dans la section longitudinale de l'insert de préhension (10-10.6).

9. Insert de préhension selon la revendication 8, **caractérisé en ce que**
l'insert de préhension (10.5) comporte dans son fond arrière (11.5a) une rainure périphérique (11.5b) en tant qu'affaiblissement de matériau et une ouverture (11.5c) pour le montage d'un moyen de fixation.

10. Insert de préhension (10.6) selon la revendication 8 ou 9,
**caractérisé en ce que**
l'insert de préhension (10.6) comporte à son extrémité arrière (11.6) une pluralité d'éléments en crochet (11.6d) et le boîtier (20.6) comporte un élément de bride (20.6a) correspondant, sachant que les éléments en crochet (11.6d) viennent en butée sur l'élément de bride (20.6a) lors de l'application de pression de la tulipe d'emballage (100.6) et de la déformation causée de ce fait de l'insert de préhension (10.6) et évitent ou limitent ainsi un mouvement axial de l'insert de préhension (10.6).

11. Tulipe d'emballage (100.3, 100.4, 100.5, 100.6) pour la saisie côté tête de bouteilles pouvant être fermées en particulier par une fermeture avec un boîtier (20.3, 20.4, 20.5, 20.6) en forme de pot et un insert de préhension (10.3, 10.4, 10.5, 10.6) en forme de manchon ou en forme de pot élastiquement déformable selon l'une quelconque des revendications 1 à 10,
sachant que l'insert de préhension (10.3, 10.4, 10.5, 10.6) élastiquement déformable est appuyé à son extrémité avant (12) tournée en fonctionnement de la tulipe d'emballage (100.3, 100.4, 100.5, 100.6) vers la tête de bouteille sur un décrochement fixe sur boîtier radialement tourné vers l'intérieur.

12. Tulipe d'emballage (100.3, 100.4, 100.5, 100.6) selon la revendication 11,
**caractérisé en ce que**
le diamètre extérieur de l'insert de préhension (10.3, 10.4, 10.5, 10.6) est dimensionné par rapport au diamètre intérieur du boîtier (20.3, 20.4, 20.5, 20.6) de telle manière qu'i se forme un volume annulaire continu entre la paroi intérieure du boîtier (20.3, 20.4, 20.5, 20.6) et le côté extérieur (13a) de la paroi périphérique (13) de l'insert de préhension (10.3, 10.4, 10.5, 10.6).

13. Dispositif pour la saisie côté tête de bouteilles pouvant être fermées en particulier par une fermeture avec au moins une tulipe d'emballage (100.3, 100.4, 100.5, 100.6) selon la revendication 11 ou 12.

14. Procédé pour la saisie côté tête d'une bouteille pouvant être fermée en particulier par une fermeture à l'aide une tulipe d'emballage (100.3, 100.4, 100.5, 100.6) selon la revendication 11 ou 12, sachant que lors de l'application de pression de l'insert de préhension (10.3, 10.4, 10.5, 10.6), les sections de paroi (16) axiales disposées sur le côté intérieur (13b) de la paroi périphérique (13) entre les rainures (14) passant pour l'essentiel axialement se déplacent radialement vers l'intérieur, pendant que les rainures (14) passant pour l'essentiel axialement se replient de telle manière que les bords de rainure (14a) limitant respectivement les rainures (14) se touchent mutuellement, la déformation de l'insert de préhension (10.3, 10.4, 10.5, 10.6) étant de ce fait limité.
